# EUROPEAN PATENT APPLICATION

(11) **EP 4 851 123 A1**
(43) Date of publication of application: **09.12.2026**
(21) Application number: 25777788.8
(22) Date of filing: 12.03.2025
(51) Int. Cl.: C04B 22/14, C04B 22/06, C04B 22/08, C04B 28/02, C04B 103/60

(54) **CO2-IMMOBILIZING EXPANSIVE MATERIAL, CEMENT COMPOSITION, AND CONCRETE COMPOSITION**

(30) Priority: 29.03.2024 JP 2024056229
(71) Applicant: Denka Company Limited, Tokyo 103-8338 (JP)
(72) Inventor: MAEDA, Takumi, Tokyo 103-8338 (JP)
(74) Representative: Viering, Jentschura & Partner mbB Patent- und Rechtsanwälte
(86) International application number: PCT/JP2025/009340
(87) International publication number: WO 2025/204918

(57) **Abstract**

Provided is CO₂-immobilizing expansive material containing an ettringite-generating compound that generates ettringite, and the ettringite-generating compound preferably contains free lime as a mineral composition.

## Description

### Technical Field

The present invention relates to a CO₂-immobilizing expansive material, a cement composition, and a concrete composition.

### Background Art

Reduction of cracks in cement and concrete is important from the viewpoint of reliability, durability, aesthetics, and the like of products and structures. Therefore, further development of a technique of an expansive material having an effect of improving these is desired.

In addition, in order to reduce the total amount of CO₂ discharged when a concrete product is produced, it is effective to reduce the amount of cement used by blending a large amount of special admixture or industrial by-product (ground granulated blast furnace slag, fly ash, or the like) as a substitute for cement, and various studies have been conducted.

Under such circumstances, a technique for absorbing (immobilizing) CO₂ in a cement hardened body has also been studied. For example, Patent Literature 1 discloses a method for forcibly absorbing or carbonating CO₂ during production. Specifically, a method for immobilizing carbon dioxide is disclosed, the method including a contact step of bringing a carbon dioxide-containing gas into contact with a cementitious hardened body to immobilize carbon dioxide contained in the carbon dioxide-containing gas in the cementitious hardened body.

### Citation List

### Patent Literature

Patent Literature 1: JP 2020-15659 A

### Summary of Invention

### Technical Problem

However, in the immobilization method of Patent Literature 1, the amount of water in the carbon dioxide-containing gas is set to 1.5% or more and the temperature is set to 75 to 175°C, but there is no disclosure or suggestion about a material that immobilizes CO₂. In addition, there is no disclosure of an expansive material.

From the above, an object of the present invention is to provide a CO₂-immobilizing expansive material having good expansion performance and CO₂-immobilizing performance.

### Solution to Problem

As a result of intensive studies to solve the above problems, the present inventors have conceived the following present invention and found that the problems can be solved. That is, the present invention is as follows.

[1] A CO₂-immobilizing expansive material containing an ettringite-generating compound that generates ettringite.
[2] The CO₂-immobilizing expansive material according to [1], wherein the ettringite-generating compound contains free lime as a mineral composition.
[3] The CO₂-immobilizing expansive material according to [2], containing 10 to 70 mass% of the free lime.
[4] The CO₂-immobilizing expansive material according to any one of [1] to [3], wherein the ettringite-generating compound contains hauyne as a mineral composition.
[5] The CO₂-immobilizing expansive material according to any one of [1] to [4], wherein the ettringite-generating compound contains ternesite and/or gehlenite as a mineral composition.
[6] The CO₂-immobilizing expansive material according to [5], wherein a content (total content) of the ternesite and the gehlenite in the ettringite-generating compound is 2 to 15 mass%.
[7] The CO₂-immobilizing expansive material according to any one of [1] to [6], wherein a Blaine specific surface area is 2000 to 6000 cm²/g.
[8] The CO₂-immobilizing expansive material according to any one of [1] to [7], for use mixed with cement.
[9] A cement composition containing the CO₂-immobilizing expansive material according to any one of [1] to [8] and cement.
[10] A concrete composition containing the CO₂-immobilizing expansive material according to any one of [1] to [8], cement, and an aggregate.

### Advantageous Effects of Invention

According to the present invention, it is possible to provide a CO₂-immobilizing expansive material having good expansion performance and CO₂-immobilizing performance.

### Description of Embodiments

Hereinafter, an embodiment of the present invention (the present embodiment) will be described in detail.

### [CO₂-immobilizing expansive material]

The CO₂-immobilizing expansive material of the present embodiment contains an ettringite-generating compound that generates ettringite. In the present embodiment, in a cement composition or a concrete composition containing the CO₂-immobilizing expansive material, ettringite generated along with solidification of the cement composition or the concrete composition incorporates carbon dioxide (CO₂) into its crystal, thereby absorbing CO₂. In addition, due to expansion performance of the CO₂-immobilizing expansive material, a good expansion effect is exhibited.

Here, the "solidification" refers to a state in which compressive strength is 2.5 N/mm² or more in accordance with a method specified in JIS R 5201:2015 "Physical testing methods for cement".

Regarding the CO₂ absorption described above, it is expected that a large amount (generated ettringite is expected to absorb 3 moles, 4.2 moles, or 4.6 moles of CO₂ per mole of ettringite) of CO₂ is absorbed by the generated ettringite according to any one of the following formulas (1) to (3) although the absorption depends on conditions such as humidity.

Formula (1): 3CaO·Al₂O₃·3CaSO₄·32H₂O + 3CO₂ → 3CaCO₃ + Al₂O₃ (gel) + 3CaSO₄·2H₂O + 26H₂O

Formula (2): 3CaO·Al₂O₃·3CaSO₄·31.1H₂O + 4.6CO₂ → 3CaCO₃ + Al₂O₃·10.4H₂O·1.6CO₂ + 3CaSO₄·0.5H₂O + 19.2H₂O

Formula (3): 3CaO·Al₂O₃·3CaSO₄·30.9H₂O + 4.2CO₂ → 3CaCO₃ + Al₂O₃·7.9H₂O·1.2CO₂ + 3CaSO₄·2H₂O + 17.0H₂O

The ettringite-generating compound according to the present embodiment is not particularly limited as long as the ettringite-generating compound is a compound that generates ettringite, and examples thereof include at least one or more selected from the group consisting of calcium sulfoaluminate, calcium aluminate, calcium fluoroaluminate, calcium chloroaluminate, alinite, Na₂O·8CaO·3Al₂O₃, alum, sulfate, and the like.

Among them, a combination of at least one of calcium sulfoaluminate and calcium aluminate and a sulfate is preferable from the viewpoint of development of good strength and CO₂ immobilization amount.

Here, the calcium aluminate (CA) according to the present embodiment is a generic term for compounds containing CaO and Al₂O₃ as main components, and specific examples thereof include amorphous compounds containing a CaO component and an Al₂O₃ component as main components, and crystalline calcium aluminates represented by CaO·2Al₂O₃, CaO·Al₂O₃, 12CaO·7Al₂O₃, 11CaO·7Al₂O₃·CaF₂, and 3CaO·3Al₂O₃·CaF₂.

Among them, the CaO/Al₂O₃ molar ratio of CA is preferably in a range of 0.45 to 3, and more preferably in a range of 0.8 to 2. When the CaO/Al₂O₃ molar ratio is 0.45 or more, sufficient initial strength development is obtained. In addition, when the CaO/Al₂O₃ molar ratio is 3 or less, sufficient flowability and pot life are obtained.

As described above, calcium aluminate in either crystalline or amorphous form can be used, but amorphous calcium aluminate obtained by rapidly cooling a melt in an electric furnace or the like is preferable, and when the content of amorphous calcium aluminate is 60 mass% or more, the calcium aluminate is excellent in strength development in a short time. The proportion of the amorphous phase (degree of amorphization) can be determined by powder X-ray diffraction/Rietveld analysis.

The calcium sulfoaluminate (CSA) according to the present embodiment is produced by, for example, calcining a calcareous raw material such as lime, a sulfate raw material such as gypsum, and an alumina raw material such as bauxite at about 1300°C to 1600°C using a kiln or the like, and pulverizing the calcined raw material.

The CSA is not particularly limited, and examples thereof include one obtained by blending raw materials at a molar ratio of CaO : Al₂O₃ : CaSO₄ of 3 : 3 : 1 and calcining and pulverizing the raw materials. This is called hauyne (3CaO·3Al₂O₃·CaSO₄).

From the viewpoint of an expansion rate, it is preferable that the ettringite-generating compound contains free lime as a mineral composition. In the ettringite-generating compound, 3 to 80 mass% of free lime is preferably contained, and 15 to 65 mass% of free lime is more preferably contained. By containing 3 to 80 mass% of free lime, excellent expansion performance can be secured.

In addition, from the viewpoint of the expansion rate and securing the strength, the ettringite-generating compound preferably contains hauyne as a mineral composition. In the ettringite-generating compound, 1 to 30 mass% of hauyne is preferably contained, and 3 to 25 mass% of hauyne is more preferably contained. By containing 1 to 30 mass% of hauyne, both excellent expansion performance and strength development can be achieved.

From the viewpoint of efficient CO₂ immobilization, it is preferable that the ettringite-generating compound contains ternesite and/or gehlenite as a mineral composition. The total amount of ternesite and gehlenite in the ettringite-generating compound is preferably 2 to 15 mass%, and more preferably 3 to 10 mass%. By containing 2 to 15 mass% of the total amount of ternesite and gehlenite, CO₂ can be more efficiently immobilized. In order to achieve the above contents of ternesite, adjustment may be performed by, for example, mixing silicon dioxide as a reagent with the raw material.

Examples of the sulfate include alkali metal sulfate and alkaline earth metal sulfate.

Examples of the alkali metal of the alkali metal sulfate include lithium, sodium, and potassium, and sodium is preferable. The alkali metal sulfate may be used singly or in combination of two or more kinds.

Examples of the alkaline earth metal of the alkaline earth metal sulfate include magnesium and calcium, and calcium is preferable. The alkaline earth metal sulfate may be used singly or in combination of two or more kinds. The particle size and grain size of the alkaline earth metal sulfate are not particularly limited, and those having a Blaine specific surface area of about 4000 to 8500 cm²/g are exemplified.

Here, the alkaline earth metal sulfate is preferably calcium sulfate, and examples thereof include anhydrous gypsum (anhydrous calcium sulfate), hemihydrate gypsum (calcium sulfate hemihydrate), and dihydrate gypsum (calcium sulfate dihydrate). Among them, anhydrous gypsum is preferable.

The content of the sulfate is preferably 7 to 60 parts by mass, more preferably 15 to 58 parts by mass, and still more preferably 20 to 57 parts by mass on an anhydrous basis with respect to 100 parts by mass of calcium sulfoaluminate.

In addition, the content of the sulfate is preferably 40 to 160 parts by mass, more preferably 42 to 157 parts by mass, and still more preferably 45 to 155 parts by mass on an anhydrous basis with respect to 100 parts by mass of calcium aluminate. When the content of the alkaline earth metal sulfate is within the above range, long-term strength development tends to be excellent.

From the viewpoint of development of good strength and CO₂ immobilization amount, it is preferable that the ettringite-generating compound is calcium sulfoaluminate and/or calcium aluminate, and contains hauyne as a mineral composition. In the ettringite-generating compound, 10 mass% or more of hauyne is preferably contained, and 15 mass% or more of hauyne is more preferably contained. The amount of hauyne can be adjusted by changing the component ratio of CaO, Al₂O₃, and SO₃ in the raw material. The upper limit is not particularly limited, but is actually 80 mass%.

In addition, from the viewpoint of development of good strength and CO₂ immobilization amount, the content of calcium sulfate as a mineral composition in the ettringite-generating compound is preferably 2 to 75 mass%, and more preferably 10 to 70 mass%.

The mineral composition of free lime, hauyne, ternesite, gehlenite, calcium sulfate, and the like in the ettringite-generating compound can be measured by an XRD/Rietveld method.

The Blaine specific surface area of the ettringite-generating compound is preferably 1,500 to 8,000 cm²/g, and more preferably 2,000 to 7,000 cm²/g from the viewpoint of sufficiently exhibiting the function.

In the CO₂-immobilizing expansive material of the present embodiment, the Blaine specific surface area is preferably 1,500 to 8,000 cm²/g, more preferably 2,000 to 7,000 cm²/g, and still more preferably 2,000 to 6,000 cm²/g from the viewpoint of sufficiently exhibiting the function.

The content of the ettringite-generating compound is preferably 80 mass% or more, and more preferably 90 mass% or more in the CO₂-immobilizing expansive material from the viewpoint of sufficiently exhibiting the function.

In addition, when a solidified body obtained by mixing 50 parts by mass of water with respect to 100 parts by mass of the CO₂-immobilizing expansive material and curing the mixture for 24 hours is allowed to stand for 24 hours in an environment with a CO₂ concentration of 5% at 20°C and 60%RH, the CO₂ immobilization rate is preferably 9% or more, and more preferably 10% or more.

Here, the immobilization rate can be determined by the proportion of the number of moles of reacted CaO to the number of moles of CaO before the reaction (reacted CaO-mol/CaO-mol before the reaction).

The CO₂-immobilizing expansive material as described above can be used as it is for various applications or mixed with other materials, but in consideration of application of existing techniques related to long-term durability and maintenance at the time of using a solidified body, it is preferable that the CO₂-immobilizing expansive material is used for mixing with cement or concrete.

### [Cement composition and concrete composition]

A cement composition according to the present embodiment contains the above-described CO₂-immobilizing expansive material of the present invention and cement. In addition, a concrete composition according to the present embodiment contains the above-described CO₂-immobilizing expansive material of the present invention and cement.

The cement composition in the present embodiment is a generic term for cement, cement paste, and mortar.

The content of the CO₂-immobilizing expansive material is preferably in a range of 5 to 90 parts by mass, and more preferably in a range of 30 to 80 parts by mass with respect to 100 parts by mass of cement from the viewpoint of improving expandability and CO₂ immobilization.

The cement used in the present embodiment is not particularly limited, and examples thereof include various types of cements such as ordinary, early strength, ultra-early strength, low heat, and moderate heat cements, various types of mixed cements obtained by mixing blast furnace slag, fly ash, silica fume, or the like with these cements, environmentally friendly cements (eco cements) produced using urban waste incineration ash or sewage sludge incineration ash as a raw material, siliceous substances such as metakaolin and clay calcined ash, and commercially available fine-particle cements, and it is also possible to use various types of cements and various types of mixed cements after being formed into a finely powdered form. In addition, it is also possible to use those which are adjusted by increasing or decreasing the amounts of components (such as gypsum) normally used in a cement. In the present embodiment, it is preferable to select ordinary Portland cement or early strength Portland cement from the viewpoint of hydration heat, dry shrinkage, and filling properties.

In addition, from the viewpoint of production cost and strength development, the Blaine specific surface area of the cement is preferably 2,500 to 7,000 cm²/g, and more preferably 2,750 to 6,000 cm²/g.

In the present specification, the Blaine specific surface area is determined in accordance with JIS R 5201 (Physical testing methods for cement).

Examples of the fine aggregate used in the present embodiment include river sand, mountain sand, land sand, sea sand, silica sand, crushed sand, crushed limestone sand, blast furnace slag fine aggregate, and recycled fine aggregate. The type and content of the fine aggregate may be selected according to the target mechanical strength of a concrete hardened body.

Examples of the coarse aggregate used in the present embodiment include crushed stone obtained by crushing andesite, rhyolite, hard sandstone, limestone, and the like, river gravel, mountain gravel, land gravel, blast furnace slag coarse aggregate, and recycled coarse aggregate. The rock type, size, and content of the coarse aggregate may be selected according to the target mechanical strength of a concrete hardened body.

In the present embodiment, various materials may be contained. Examples thereof include a water reducing agent, an AE agent, a foaming agent, a shrinkage reducing agent, a waterproof agent, a rust inhibitor, a thickener, a polymer, a water retention agent, a pigment, a water repellent agent, and an anti-efflorescence agent.

### Examples

Hereinafter, the present invention will be described specifically with reference to examples, but the present invention is not limited thereto.

### [Experimental Example 1]

### <Preparation of CO₂-immobilizing expansive material>

A calcium carbonate reagent, an aluminum hydroxide reagent, a calcium sulfate reagent, and a silicon dioxide reagent were mixed so as to have the composition shown in the following Table 1, and the mixture was heated at 1350°C for 3 hours to adjust the Blaine specific surface area to 3500 cm²/g, thereby preparing an ettringite-generating compound, and the compound was used as a CO₂-immobilizing expansive material.

### (Evaluation)

### <Strength>

A composition having a water/powder mass ratio of 0.5 and a fine aggregate/powder mass ratio of 3.0 was molded into a specimen of 40 × 40 × 160 mm, and the strengths (JIS R 5201:2015 "Physical testing methods for cement") at the age of 1, 3, and 7 days was measured. The ettringite-generating compound was mixed in an amount of 5% by mass with respect to the powder.

The "powder" described above refers to the total of the ettringite-generating compound and cement (ordinary Portland cement). In addition, silica sand was used as the fine aggregate. After demolding at the age of 1 day, carbonation curing was performed under conditions of a temperature of 20°C, a humidity of 60%RH, and a CO₂ concentration of 5%.

### < CO₂ absorption amount (CO₂ content rate, CO₂ immobilization rate)>

A paste having a water/powder mass ratio of 0.5 was molded into a specimen of 20 × 20 × 80 mm, and after demolding at the age of 1 day, carbonation curing was performed under conditions of a temperature of 20°C, a humidity of 60%RH, and a CO₂ concentration of 5%. The ettringite-generating compound was mixed in an amount of 6.7% by mass with respect to the powder.

Thereafter, the test body was pulverized to 90 µm or less at a predetermined age, and then the CO₂ content was measured by a coulometer method.

The "powder" described above refers to the total of the ettringite-generating compound and cement (ordinary Portland cement).

### < Expandability >

A composition having a water/powder mass ratio of 0.5 and a fine aggregate/powder mass ratio of 3.0 was molded into a specimen of 40 × 40 × 160 mm, and the length change rate (JIS A 6202:2017 "Expansive material for concrete") at the age of 7 and 28 days was measured. After demolding at the age of 1 day, carbonation curing was performed under conditions of a temperature of 20°C, a humidity of 60%RH, and a CO₂ concentration of 5%.

The "powder" described above refers to the total of the ettringite-generating compound and cement (ordinary Portland cement). The ettringite-generating compound was mixed in an amount of 6.7% by mass with respect to the powder. In addition, silica sand was used as the fine aggregate.

**[Table 1]**

| Experiment No. | Ettringite-generating compound | | | | | Evaluation | | | | | | | | Remarks |
|---|---|---|---|---|---|---|---|---|---|---|---|---|---|---|
| | Mineral composition (mass%) | | | | | Strength (N/mm²) | | | Expandability: length change rate (x10⁻⁶) | | CO₂ content rate (mass%) | | | |
| | Free lime (CaO) | CaSO₄ | Hauyne | Ternesite + gehlenite | Total | 1 day | 3 days | 7 days | 7 days | 28 days | 1 day | 3 days | 7 days | |
| 1-1 | 55 | 33 | 5 | 5 | 98 | 12.7 | 35.0 | 47.3 | 120 | -100 | 10.8 | 14.4 | 18.8 | Example |
| 1-2 | 5 | 73 | 10 | 10 | 98 | 14.0 | 36.0 | 49.0 | -100 | -230 | 9.2 | 11.9 | 16.0 | Example |
| 1-3 | 30 | 48 | 10 | 10 | 98 | 13.0 | 35.8 | 48.2 | 80 | -120 | 10.2 | 13.6 | 17.6 | Example |
| 1-4 | 70 | 8 | 10 | 10 | 98 | 11.8 | 34.2 | 45.5 | 300 | 20 | 11.4 | 15.6 | 19.5 | Example |
| 1-5 | 75 | 3 | 10 | 10 | 98 | 8.7 | 28.2 | 38.6 | 350 | 60 | 11.6 | 15.7 | 19.8 | Example |
| 1-6 | 20 | 68.5 | 10 | 1 | 99.5 | 13.6 | 37.2 | 39.8 | -10 | -140 | 9.6 | 10.4 | 15.2 | Example |
| 1-7 | 20 | 66 | 10 | 3 | 99 | 13.2 | 36.2 | 49.1 | -30 | -170 | 10.6 | 12.7 | 18.2 | Example |
| 1-8 | 20 | 56 | 10 | 13 | 99 | 12.2 | 33.0 | 45.6 | -60 | -190 | 10.3 | 12.1 | 17.9 | Example |
| 1-9 | 20 | 49 | 10 | 20 | 99 | 11.2 | 31.0 | 44.9 | -80 | -220 | 9.8 | 10.6 | 15.8 | Example |

## Claims

1. A CO₂-immobilizing expansive material comprising an ettringite-generating compound that generates ettringite.

2. The CO₂-immobilizing expansive material according to claim 1, wherein the ettringite-generating compound contains free lime as a mineral composition.

3. The CO₂-immobilizing expansive material according to claim 2, comprising 10 to 70 mass% of the free lime.

4. The CO₂-immobilizing expansive material according to claim 1, wherein the ettringite-generating compound contains hauyne as a mineral composition.

5. The CO₂-immobilizing expansive material according to claim 1, wherein the ettringite-generating compound contains ternesite and/or gehlenite as a mineral composition.

6. The CO₂-immobilizing expansive material according to claim 5, wherein a content of the ternesite and the gehlenite in the ettringite-generating compound is 2 to 15 mass%.

7. The CO₂-immobilizing expansive material according to claim 1, wherein a Blaine specific surface area is 2000 to 6000 cm²/g.

8. The CO₂-immobilizing expansive material according to claim 1, for use mixed with cement.

9. A cement composition comprising the CO₂-immobilizing expansive material according to any one of claims 1 to 8 and cement.

10. A concrete composition comprising the CO₂-immobilizing expansive material according to any one of claims 1 to 8, cement, and an aggregate.
